# EUROPEAN PATENT APPLICATION

(11) **EP 1 959 611 A1**
(43) Date of publication of application: **20.08.2008**
(21) Application number: 06823536.5
(22) Date of filing: 01.12.2006
(51) Int. Cl.: H04L 12/28, H04L 1/16

(54) **WIRELESS LAN COMMUNICATION SYSTEM**

(30) Priority: 09.12.2005 JP 2005355997
(71) Applicant: NEC Corporation, Minato-ku Tokyo 108-8001 (JP)
(72) Inventor: MIYAMOTO, Hiroaki, Tokyo 108-8001 (JP)
(74) Representative: Vossius & Partner
(86) International application number: PCT/JP2006/324057
(87) International publication number: WO 2007/066588

(57) **Abstract**

A wireless LAN terminal (AP) transmits a data frame to a counter wireless LAN terminal (STA-j), and receives an ACK frame from STA-j. AP measures a response time from the transmission of the data frame to reception of the ACK frame, and measures a transmission interval time from the previous transmission of the data frame to STA-j to the current transmission. AP includes a memory to store a predetermined set transmission interval time and a set response time for said terminal station. AP re-transmits the data frame when the transmission interval time does not exceed the set transmission interval time and the response time exceeds the set response time, and stores the response time in said memory as the set response time, when the transmission interval time exceeds the set transmission interval time.

## Description

### Technical Field

The present invention relates to a wireless LAN communication system that carries out a communication by using a wireless LAN (Local Area Network).

### Background Art

A wireless LAN communication system is known that carries out a communication by using a wireless LAN. The wireless LAN communication system contains a wireless LAN terminal connected to a wireless LAN and a plurality of terminal stations. The wireless LAN terminal is an AP (Access Point) that is a base station of the wireless LAN, and each of the plurality of terminal stations is an STA (Station). According to IEEE802.11, in the communication between the wireless LAN terminal AP and the terminal station STA, the wireless LAN terminal AP transmits a data frame to the terminal station STA. When receiving the data frame, the terminal station STA transmits (replies) an ACK (Acknowledgment) frame to the wireless LAN terminal AP, and the ACK frame indicates the reception of the data frame. In this case, the ACK frame is transmitted from the terminal station STA an SIFS time (16 µsec) after the terminal station STA receives the data frame from the wireless LAN terminal AP. The wireless LAN terminal AP re-transmits the data frame when the ACK frame cannot be received within a predetermined set response time {the SIFS time (16 µsec) + several µsec} after the transmission of the data frame.

In the wireless LAN communication system, although the terminal station STA is installed at an original installation position by a user, there is a case that the terminal station STA is moved and installed at a next installation position after a certain time. In this case, the communication distance between the wireless LAN terminal AP and the terminal station STA is elongated longer than the original communication distance, so that a propagation delay is generated. In the wireless LAN terminal AP, the reception of the ACK frame is delayed, so that the wireless LAN terminal AP determines the reception failure of the ACK frame. When the wireless LAN terminal AP sets a time, which is required to determine the reception failure of the ACK frame, to the longest time on the system for all of the terminal stations STA, a long time is required for the re-transmission, and the reduction in throughput is caused.

As the technique related to a communication system, Japanese Patent Application Publication (JP-P2000-236352A) discloses a data transfer system. This data transfer system is a system for propagating a data packet between data transfer apparatuses that constitute the nodes in a network. The data transfer system is characterized in that a receiving side includes a first memory unit for storing a data packet reception time and a response packet replying unit for replying to a transmission side, a response packet which contains a data packet reception time and a response packet transmission time, and that the transmission side includes a second memory unit for storing a data packet transmission time, a response packet reception time and a data packet reception time, and a time calculator for calculating and updating a response monitor time for each data packet transmission and a transmission interval time between the data packets in accordance with data packet transmission times, the response packet reception time, the data packet reception time and the time until the response packet reception after the transmission of the data packet. Thus, the response monitor time is optimized for each packet.

Japanese Patent Application Publication (JP-P2004-253934A) discloses a wireless communication system. In this wireless communication system, a re-transmission timeout time is determined when not receiving a reception check response to a transmission data, and the transmission data is re-transmitted. The wireless communication system is characterized by containing a monitor for monitoring the transmission data and the reception check response, and a calculator for calculating a re-transmission timeout time in accordance with the monitor result of the monitor in a predetermined period. Consequently, the throughput is improved, and the communication use rate is optimized.

Japanese Patent Application Publication (JP-P2005-136506A) discloses a data distributing system. This data distributing system is characterized by containing a relaying apparatus and a data distributing apparatus. The relaying apparatus receives a distribution data and writes a reception time into a response signal to be replied to the transmission source of the distribution data. The data distributing apparatus determines a distribution delay time from the difference between the reception time written in the response signal received from the relaying apparatus and a distribution time of the distribution data corresponding to this. Also, the data distributing apparatus determines the difference between the plurality of determined distribution delay times and then determines the distribution time of the distribution data to each relaying apparatus in accordance with this difference between the respective distribution delay times, and further distributes the distribution data to the relaying apparatus in response to those distribution times. Thus, the data reception timing difference between the plurality of relaying nodes is removed, thereby executing a broadcast communication service excellently.

Japanese Patent Application Publication (JP-A-Heisei, 10-32584) discloses a data transfer apparatus. This data transfer apparatus is connected to an ATM network and carries out a data communication. The data transfer apparatus is characterized by containing a connection setter for setting a logical connection for each VC, a protocol processor for executing a protocol process having a selection re-transmission procedure on the logical connection, and a parameter manager for managing a protocol parameter required for the protocol process. Thus, in the data transfer apparatus that is connected to the ATM network and carries out the data transfer, even when a re-transmission control function is used, the performance enough to transfer the data having a high real time property such as video data and the like is obtained.

Japanese Laid Open Patent Application (JP-A-Heisei, 3-64225) discloses a communication control apparatus that uses a high-level data link control procedure. This communication control apparatus contains a reception check timer in which a predetermined allowable time is set, and a time-counting is started when a first station for carrying out a data link control sends a command requesting a response, and the time-counting is stopped and reset when the response corresponding to the command is received from a second station for executing a control function in accordance with the instruction of the first station, and it uses the high level data link control procedure for detecting the timeout of the reception check timer and executing an error recovering process. The communication control apparatus is characterized in that a timer adjuster for changing the allowable time, which is set for the reception check time, in accordance with a convergence state.

Japanese Patent Application Publication (JP-A-Heisei, 2-62145) discloses a data communication apparatus. This data communication apparatus is connected to a terminal apparatus and divides the signal received from the terminal apparatus into predetermined frame lengths and then sends the divided frame length as a transmission data to a counter station that is a desirable transmission destination and further monitors the reply of the response signal corresponding to the transmission data from the counter station during a reception wait period. The data communication apparatus is characterized by including a line delay measuring section for measuring a line delay time between a time when the transmission data is sent to the counter station and a time until the reply of the response signal of the transmission data from the counter station; a data frame length selector for dividing the signal received from the terminal apparatus into the predetermined frame lengths; and a variable reception wait timer for measuring the time until the reception of the response signal from the counter station as a response prediction time in accordance with the line delay time and the frame length and then setting the predicted time as the reception wait time.

### Disclosure of Invention

An object of the present invention is to provide a wireless LAN communication system that can carry out an optimal communication based on a communication distance, when a terminal station is moved from an original installation position to a next installation position.

Another object of the present invention is to provide a wireless LAN communication system that can carry out an optimal communication so as to determine reception failure of an ACK frame.

Still another object of the present invention is to provide a wireless LAN communication system that can carry out an optimal communication without causing the reduction of throughput.

Those objects of the present invention and the objects and benefits other than them in the present invention will be easily understood from the following explanations and the attached drawings.

In order to attain the above-mentioned subject matter, the wireless LAN (Local Area Network) communication system of the present invention contains a wireless LAN terminal and a terminal station, which are computers connected to a wireless LAN. The wireless LAN terminal contains a transmitting section, a receiving section, a response time measuring section, a transmission interval measuring section, a control section and a memory. The transmitting section transmits a data frame to the terminal station. The receiving section receives the ACK (Acknowledgment) frame for the data frame from the terminal station. The response time measuring section measures a response time from a time when the transmitting section transmits the data frame to the terminal station to a time when the receiving section receives an ACK frame from the terminal station. The transmission interval measuring section measures a transmission interval time from a time when the transmitting section transmits a previous data frame to the terminal station to a time when the data frame as a current data frame is transmitted. The memory stores a predetermined set transmission interval time and a set response time in the terminal station. The control section refers to the memory when the data frame is transmitted and monitors the transmission interval time and the response time. If the transmission interval time does not exceed the set transmission interval time and the response time exceeds the set response time, the control section controls the transmitting section so that the data frame is re-transmitted. The control section stores (updates) the response time in the memory as the set response time, if the transmission interval time exceeds the set transmission interval time.

In the wireless LAN communication system, there is a case that, even when the terminal station is installed at an original installation position by the user, it is moved and installed at a next installation position after a certain time. At this time, the communication distance between the wireless LAN terminal and the terminal station would sometimes be elongated longer than the original communication distance. In this case, the propagation delay is generated. Thus, in the wireless LAN terminal, the reception of the ACK frame is delayed, which results in the determination of the reception failure of the ACK frame.

In the present invention, when transmitting the data frame to the terminal station, the wireless LAN terminal re-transmits the data frame, if the transmission interval time measured by the transmission interval measuring section does not exceed the set transmission interval time and the response time measured by the response time measuring section exceeds the set response time. Also, in the present invention, when transmitting the data frame to the terminal station, the wireless LAN terminal recognizes a possibility that the terminal station is moved to a next installation position from the original installation position by the user, if the transmission interval time exceeds the set transmission interval time. In this case, the wireless LAN terminal stores (updates) the response time measured by the response time measuring section in the memory as the set response time.

In this way, in the wireless LAN communication system of the present invention, when the terminal station is moved to the next installation position from the original installation position, if the transmission interval time exceeds the set transmission interval time, the set response time is updated, so that the optimal communication can be performed without any unnecessary determination of the reception failure of the ACK frame based on the communication distance

In the wireless LAN communication system of the present invention, the memory includes an initial set response time storing section and a set response time storing section. The initial set response time storing section stores an initial set response time based on a predetermined maximum communication distance. The set response time storing section stores the set response time in the terminal station. The transmitting section communicates with the terminal station. At this time, the control section refers to the initial set response time storing section. Accordingly, the control section controls the transmitting section so that the data frame is re-transmitted, if the response time exceeds the initial set response time. On the other hand, the control section stores the response time as the set response time in the set response time storing section, if the response time does not exceed the initial set response time.

When transmitting the first data frame to the terminal station, the wireless LAN terminal does not know the communication distance between the wireless LAN terminal and the terminal station. For this reason, in the present invention, when transmitting the first data frame to the terminal station, the wireless LAN terminal refers to the memory and recognizes the initial set response time corresponding to the maximal communication distance, in order to determine the success or failure of the reception of the ACK frame. The wireless LAN terminal re-transmits the data frame, if the response time measured by the response time measuring section exceeds the initial set response time. Thus, the wireless LAN communication system of the present invention can carry out the optimal communication to determine the reception failure of the ACK frame.

The fact that the response time measured by the response time measuring section does not exceed the initial set response time implies that the wireless LAN terminal successfully receives the ACK frame and that the communication distance between the wireless LAN terminal and the terminal station is shorter than the maximal communication distance. However, when even in the next communication with the terminal station, the wireless LAN terminal refers to the initial set response time and re-transmits the data frame, it takes a long time to re-transmit the data frame and this involves the reduction in the throughput. Therefore, the wireless LAN terminal stores the response time measured by the response time measuring section, as the set response time in the memory, in order to refer to the set response time in the next communication with the terminal station. Thus, the wireless LAN communication system of the present invention can carry out the optimal communication that does not involve the reduction in the throughput.

In the wireless LAN communication system of the present invention, the memory further includes the set transmission interval time storing section. The set transmission interval time storing section stores the set transmission interval time. The transmitting section communicates with the terminal station. At this time, the control section refers to the set transmission interval time storing section and the set response time storing section. Thus, if the transmission interval time does not exceed the set transmission interval time and the response time exceeds the set response time, the control section controls the transmitting section so that the data frame is re-transmitted. On the other hand, if the transmission interval time exceeds the set transmission interval time, the control section stores (updates) the response time as the set response time in the set response time storing section.

When the wireless LAN terminal transmits the second or subsequent data frame to the terminal station, if whether or not the response time exceeds it is determined based on the initial set response time although the communication distance between the wireless LAN terminal and the terminal station is shorter than the maximal communication distance, the determination involves the reduction in the throughput. Therefore, in the present invention, when transmitting the second or subsequent data frame to the terminal station, the wireless LAN terminal refers to the memory and recognizes the set response time and the set transmission interval time. The wireless LAN terminal re-transmits the data frame, if the transmission interval time measured by the transmission interval measuring section does not exceed the set transmission interval time and the response time measured by the response time measuring section exceeds the set response time. Thus, the wireless LAN communication system of the present invention can carry out the optimal communication that does not involve the reduction in the throughput.

Also, in the present invention, when transmitting the second or subsequent data frame to the terminal station, the wireless LAN terminal recognizes the possibility that an terminal station STA-j is moved to the next installation position from the original installation position by the user, if the transmission interval time exceeds the set transmission interval time. In this case, the wireless LAN terminal stores (updates) the response time measured by the response time measuring section as the set response time in the memory. Thus, when the terminal station is moved to the next installation position from the original installation position, the wireless LAN communication system of the present invention can carry out the optimal communication corresponding to the communication distance without any unnecessary determination of the reception failure of the ACK frame.

In the wireless LAN communication system of the present invention, the control section further refers to the initial set response time storing section, if the transmission interval time exceeds the set transmission interval time. At this time, if the response time exceeds the initial set response time, the control section controls the transmitting section so that the data frame is re-transmitted. On the other hand, if the response time does not exceed the initial set response time, the control section stores (updates) the response time as the set response time in the set response time storing unit.

In the present invention, when transmitting the second or subsequent data frame to the terminal station, the wireless LAN terminal is required to know the communication distance between the wireless LAN terminal and the terminal station, if the transmission interval time exceeds the set transmission interval time. Also, if whether or not the response time exceeds it is determined based on the set response time stored in the memory, there is the possibility of the determination of the reception failure of the ACK frame. Therefore, in the present invention, when transmitting the second or subsequent data frame to the terminal station, the wireless LAN terminal further refers to the memory and recognizes the initial set response time corresponding to the maximal communication distance, if the transmission interval time exceeds the set transmission interval time. The wireless LAN terminal re-transmits the data frame, if the response time measured by the response time measuring section exceeds the initial set response time. Thus, the wireless LAN communication system of the present invention does not carry out the unnecessary determination of the reception failure of the ACK frame, if the terminal station is moved to the next installation position from the original installation position.

Also, in the present invention, when transmitting the second or subsequent data frame to the terminal station, the wireless LAN terminal recognizes the possibility that the terminal station is moved to the next installation position from the original installation position by the user, if the transmission interval time exceeds the set transmission interval time. Moreover, the fact that the response time measured by the response time measuring section does not exceed the initial set response time implies that the wireless LAN terminal successfully receives the ACK frame and that the communication distance between the wireless LAN terminal and the terminal station is shorter than the maximal communication distance. The wireless LAN terminal stores the response time measured by the response time measuring section as the set response time in the memory, in order to refer to the set response time in the next communication with the terminal station. Thus, the wireless LAN communication system of the present invention can carry out the optimal communication corresponding to the communication distance, without any unnecessary determination of the reception failure of the ACK frame.

The wireless LAN terminal of the present invention is the above-mentioned wireless LAN terminal.

A wireless LAN communication method of the present invention uses a computer that is the above-mentioned wireless LAN terminal. The computer is attained in hardware (for example, a circuit) or in software (for example, a computer program). The computer contains a computer program. In this case, the above-mentioned transmitting section, receiving section, response time measuring section, transmission interval measuring section, control section and memory are attained by the software (computer program).

The wireless LAN communication method contains transmitting a data frame to a counter computer; receiving an ACK (Acknowledgement) frame for the data frame from the counter computer; measuring a response time from the transmission of the data frame to the counter computer to the reception of the ACK frame from the counter computer; measuring the transmission interval time from the transmission of a previous data frame to the counter computer to the transmission of the data frame which is the current data frame; and performing a control when the data frame is transmitted, to refer to the memory for storing the predetermined set transmission interval time and the set response time in the counter computer and to monitor the transmission interval time and the response time. At the performing a control, if the transmission interval time does not exceed the set transmission interval time and if the response time exceeds the set response time, the transmitting is controlled to re-transmit the data frame, and if the transmission interval time exceeds the set transmission interval time, the response time is stored as the set response time in the memory.

In the wireless LAN communication method of the present invention, the memory includes the initial set response time storing section for storing the initial set response time corresponding to the predetermined maximal communication distance; and the set response time storing section for storing the set response time in the counter computer. When the transmitting carries out the first communication with the counter computer, the performing a control further includes referring to the initial set response time storing section; controlling the transmitting so that the data frame is re-transmitted if the response time exceeds the initial set response time; and storing the response time as the set response time in the set response time storing section, if the response time does not exceed the initial set response time.

In the wireless LAN communication method of the present invention, the memory further includes the set transmission interval time storing section for storing the set transmission interval time. When the transmitting includes carrying out the communication with the counter computer, the performing a control further includes referring to the set transmission interval time storing section and the set response time storing section; controlling the transmitting so that the data frame is re-transmitted, if the transmission interval time does not exceeds the set transmission interval time and if the response time exceeds the set response time; and storing the response time as the set response time in the set response time storing section, if the transmission interval time exceeds the set transmission interval time.

In the wireless LAN communication method of the present invention, the storing the response time further includes further referring to the initial set response time storing section, if the transmission interval time exceeds the set transmission interval time; controlling the transmitting so that the data frame is re-transmitted, if the response time exceeds the initial set response time; and storing the response time as the set response time in the set response time storing section, if the response time does not exceed the initial set response time.

The computer program of the present invention instructs the computer to carry out the respective steps of the wireless LAN communication method noted in any one of the above matters. Moreover, a computer program of the present invention is stored in a storage medium that can be read by the computer having the above-mentioned programs.

### Brief Description of Drawings

FIG. 1 a diagram showing the configuration of a wireless LAN communication system to which the present invention is applied;
FIG. 2 is a diagram showing the wireless LAN communication system in a related-art;
FIG. 3 is a block diagram showing the configuration of a wireless LAN terminal AP in the wireless LAN communication system of the present invention;
FIG. 4 shows a memory map of a memory of the wireless LAN terminal AP in the wireless LAN communication system of the present invention; and
FIG. 5 is a flowchart showing an operation of the wireless LAN terminal AP in the wireless LAN communication system of the present invention.

### Best Mode for Carrying Out the Invention

Hereinafter, a wireless LAN communication system of the present invention will be described in detail with reference to the attached drawings.

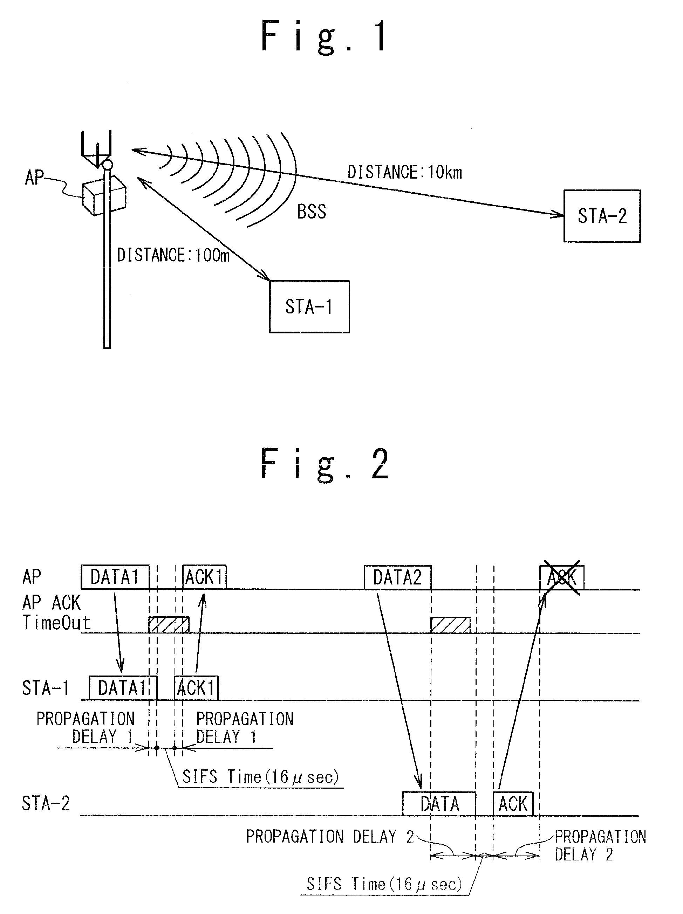

FIG. 1 shows the configuration of the wireless LAN communication system to which the present invention is applied. The wireless LAN communication system of the present invention includes a wireless LAN terminal that is a computer connected to a wireless LAN, and a plurality of counter wireless LAN terminals. The wireless LAN terminal is a base station AP (Access Point) in the wireless LAN, and each of the plurality of counter wireless LAN terminals is a terminal station STA (Station). The plurality of terminal stations are referred to as STA-1 and STA-2. In this example, the wireless LAN is Infrastructure Network defined in IEEE802.11, and the minimal unit of such a wireless LAN network is referred to as BSS (Basic Service Set).

In IEEE802.11, in the communication between the wireless LAN terminal AP and the terminal stations STA-j (j = 1, 2), when the wireless LAN terminal AP transmits a data frame to the terminal station STA-j, and the terminal station STA-j receives the data frame, the terminal station STA-j transmits (replies) an ACK (Acknowledgment) frame to the wireless LAN terminal AP. The ACK frame indicates the reception of the data frame. In this case, the ACK frame is transmitted from the terminal station STA-j after the SIFS time (16 µsec) from the reception of the data frame from the wireless LAN terminal AP. The wireless LAN terminal AP re-transmits the data frame, if the ACK frame cannot be received within a predetermined set response time {SIFS time (16 µsec) + several µsec} after the transmission of the data frame.

In the wireless LAN communication system, there is a case that after the terminal station STA-j is installed at an original installation position once by a user, the terminal station STA-j is moved and installed at a next installation position after the elapse of a certain time. In such a case, a communication distance between the wireless LAN terminal AP and the terminal station STA-j would sometimes be elongated longer than an original communication distance. In this case, a propagation delay is generated, so that in the wireless LAN terminal AP, the reception of the ACK frame is delayed, which results in the determination of the reception failure of the ACK frame. This will be described below by using FIGS. 1 and 2.

In the wireless LAN terminal AP as an outdoor wireless LAN apparatus, there is a case that a cover area is 10 km or more. Since the propagation speed of radio wave is about 300,000 km per second, the propagation delay to the distance of 10 km is 33.33 µsec, and the propagation delay in reciprocation is 66.66 µsec.

As shown in FIG. 2, when the wireless LAN terminal AP transmits a data frame DATA1 to the terminal station STA-1 installed at the distance of 100 m, the data frame DATA1 is received by the terminal station STA-1 with the delay of 333 nsec. The terminal station STA-1 transmits the ACK frame ACK1 to the wireless LAN terminal AP after the SIFS time (16 µsec) from the reception of the data frame DATA1 from the wireless LAN terminal AP. The wireless LAN terminal AP receives the ACK frame ACK1 after 333 nsec from the transmission of the ACK frame ACK1 from the terminal station STA-1.

Next, when the wireless LAN terminal AP transmits a data frame DATA2 to the terminal station STA-2 installed at the distance of 10 Km, the data frame DATA2 is received by the terminal station STA-2 with the delay of 33.33 µsec. The terminal station STA-2 transmits the ACK frame ACK2 to the wireless LAN terminal AP after the SIFS time (16 µsec) from the reception of the data frame DATA2 from the wireless LAN terminal AP. The wireless LAN terminal AP receives the ACK frame ACK2 after the 33.33 µsec from the transmission of the ACK frame ACK2 from the terminal station STA-2.

For example, it is supposed that a set response time (ACK Time Out in FIG. 2) is the SIFS time (16 µsec) + 1 µsec. In this case, the response time from the time when the wireless LAN terminal AP transmits the data frame DATA1 to the terminal station STA-1 to the time when the ACK frame ACK1 is received from the terminal station STA-1 is 333 nsec + the SIFS time (16 µsec) + 333 nsec. Since the set response time is within {16 µsec + 1 µsec}, the wireless LAN terminal AP can receive the ACK frame ACK1 from the terminal station STA-1 within the set response time {16 µsec + 1 µsec} from the transmission of the data frame DATA1 to the terminal station STA-1. Accordingly, the wireless LAN terminal AP recognizes that the terminal station STA-1 receives the data frame DATA1.

On the other hand, the response time from the time when the wireless LAN terminal AP transmits the data frame DATA2 to the terminal station STA-2 to the time when the ACK frame ACK2 is received from the terminal station STA-2 is 33.33 µsec + the SIFS time (16 µsec) + 33.33 µsec. Since the set response time exceeds {16 µsec + 1 µsec}, the wireless LAN terminal AP cannot receive the ACK frame ACK2 from the terminal station STA-2 within the set response time {16 µsec + 1 µsec} from the transmission of the data frame DATA2 to the terminal station STA-2. Accordingly, the wireless LAN terminal AP recognizes that the terminal station STA-2 does not receive the data frame DATA2, and re-transmits the data frame DATA2.

In this way, when the communication distance is elongated, the propagation delay is generated, so that the delay of the reception of the ACK frame ACK2 is caused. Thus, a trouble is caused that the data frame DATA2 is re-transmitted although the terminal station STA-2 receives the data frame DATA2.

From the above reason, in the present invention, the set response time is adjusted based on the communication distance. Also, in the present invention, a transmission interval time from the time when the wireless LAN terminal AP transmits a previous data frame to the terminal station STA-j to the time when transmitting a current data frame is managed, and the set response time is dynamically adjusted, considering the transmission interval time.

### [Exemplary Embodiment]

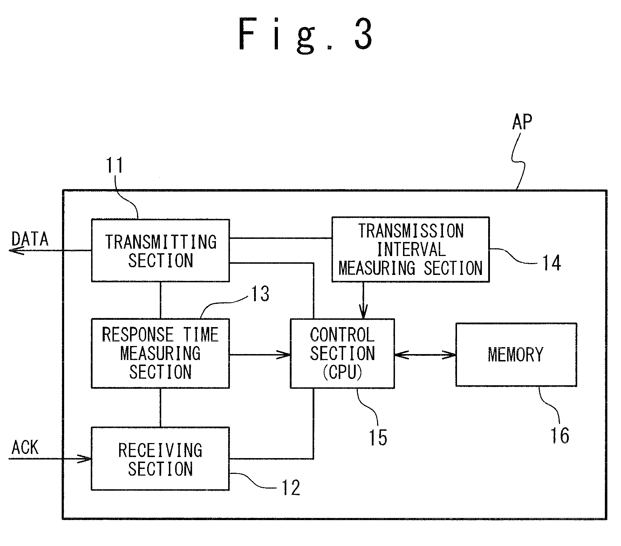

FIG. 3 shows the configuration of the wireless LAN terminal AP. The wireless LAN terminal AP contains a transmitting section 11, a receiving section 12, a response time measuring section 13, a transmission interval measuring section 14, a control section 15 and a memory 16. The transmitting section 11, the receiving section 12, the response time measuring section 13, the transmission interval measuring section 14, the control section 15 and the memory 16 are attained in hardware (for example, as circuits) or in software (for example, by a computer program). For example, the control section 15 includes a CPU (Central Processing Unit) and controls the transmitting section 11 and the receiving section 12.

The transmitting section 11 transmits data frames to the terminal stations STA-j (j =1, 2). The receiving section 12 receives ACK frames corresponding to the data frames from the terminal stations STA-j.

The response time measuring section 13 includes a timer for monitoring the transmitting section 11 and the receiving section 12. The response time measuring section 13 measures the response time from the time when the transmitting section 11 transmits the last portion of the data frame to the terminal station STA-j to the time when the receiving section 12 receives the head portion of the ACK frame from the terminal station STA-j.

The transmission interval measuring section 14 is a timer for monitoring the transmitting section 11. The transmission interval measuring section 14 measures the transmission interval time from the time when the transmitting section 11 transmits the last portion of a previous data frame to the terminal station STA-j to the time when the head portion of a current data frame is transmitted.

The memory 16 stores the predetermined set transmission interval time and the set response time in the terminal station STA-j. The control section 15 refers to the memory 16 when the data frame is transmitted, and monitors the transmission interval time measured by the transmission interval measuring section 14 and the response time measured by the response time measuring section 13. The control section 15 controls the transmitting section 11 so that the data frame is re-transmitted, if the transmission interval time does not exceed the set transmission interval time and the response time exceeds the set response time. The control section 15 stores (updates) the response time measured by the response time measuring section 13 as the set response time in the memory 16, if the transmission interval time exceeds the set transmission interval time.

As mentioned above, in the wireless LAN communication system, there is a case that after the terminal station STA-j is installed at the original installation position by the user, it is moved and installed at a next installation position after a certain time. At this time, the communication distance from the wireless LAN terminal AP to the terminal station STA-j is sometimes elongated longer than the original communication distance. In such a case, the propagation delay is generated, so that in the wireless LAN terminal AP, the reception of the ACK frame is delayed, which results in a determination of the reception failure of the ACK frame.

In the present invention, when transmitting the data frame to the terminal station STA-j, the wireless LAN terminal AP re-transmits the data frame, if the transmission interval time measured by the transmission interval measuring section 14 does not exceed the set transmission interval time TIMELAG and the response time measured by the response time measuring section 13 exceeds the set response time. Also, in the present invention, when transmitting the data frame to the terminal station STA-j, the wireless LAN terminal AP recognizes a possibility that the terminal station STA-j is moved to the next installation position from the original installation position by the user, if the transmission interval time exceeds the set transmission interval time. In this case, the wireless LAN terminal AP stores (updates) the response time measured by the response time measuring section 13 as the set response time in the memory 16.

In this way, in the wireless LAN communication system of the present invention, when the terminal station STA-j is moved to the next installation position from the original installation position, if the transmission interval time exceeds the set transmission interval time, the set response time is updated, so that the optimal communication can be performed based on the communication distance without unnecessarily performing determination of the reception failure of the ACK frame.

The wireless LAN communication system according to the present invention will be described below in detail.

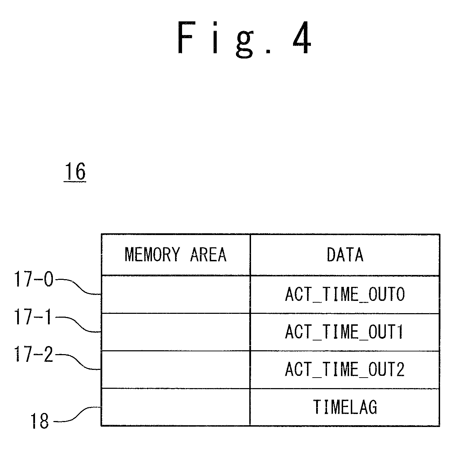

FIG. 4 shows a memory area map of the memory 16. The memory 16 includes an initial set response time storing area 17-0 and set response time storing areas 17-1 and 17-2. The initial set response time storing area 17-0 stores an initial set response time ACK_TIME_OUTO to a predetermined maximal communication distance in advance. The set response time storing areas 17-1 and 17-2 store set response times ACK_TIME_OUT1 and ACK_TIME_OUT2 I of the terminal stations STA-1 and STA-2, respectively.

The memory 16 further includes a set transmission interval time storing area 18. The set transmission interval time storing area 18 stores the set transmission interval time TIMELAG.

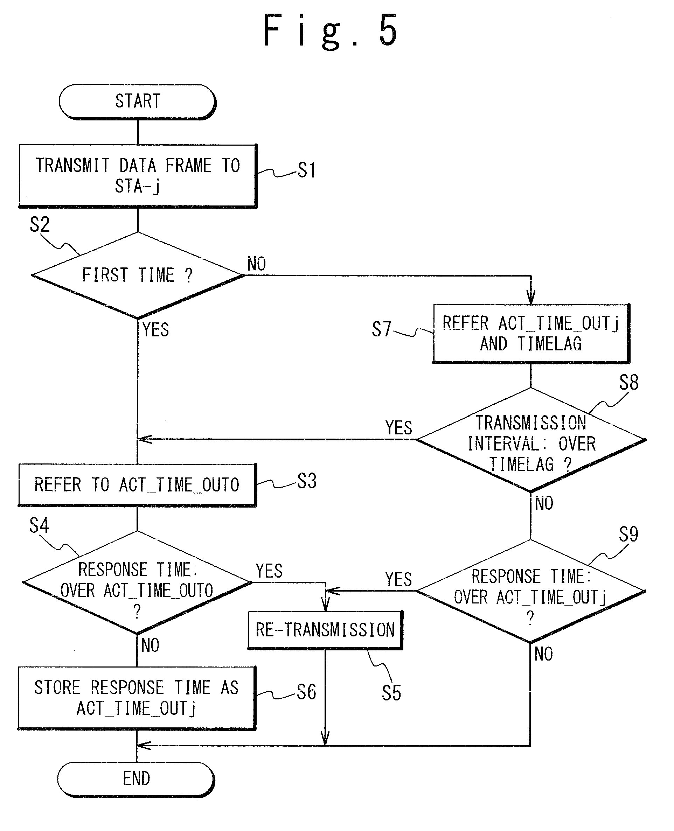

FIG. 5 is a flowchart showing an operation of the wireless LAN terminal AP. For example, the wireless LAN terminal AP (transmitting section 11) carries out the first communication with the terminal station STA-1.

The transmitting section 11 transmits the data frame to the terminal station STA-1 (Step S1). At this time, the response time measuring section 13 measures the response time from the time when the transmitting section 11 transmits the last portion of the data frame to the terminal station STA-j to the time when the receiving section 12 receives the head portion of the ACK frame from the terminal station STA-j. The control section 15 refers to the initial set response time storing area 17-0 of the memory 16. That is, the control section 15 refers to the initial set response time ACK_TIME_OUT0 (Step S2 - YES, S3).

Thus, the receiving section 12 receives the ACK frame corresponding to the data frame from the terminal station STA-1. At this time, it is supposed that the response time measured by the response time measuring section 13 exceeds the initial set response time ACK_TIME_OUT0, or the response time measured exceeds the initial set response time ACK_TIME_OUT0 in the state that the receiving section 12 does not receive the ACK frame from the terminal station STA-1 (Step S4 - YES). In this case, the control section 15 controls the transmitting section 11 so that the data frame is re-transmitted (Step S5).

The receiving section 12 receives the ACK frame corresponding to the data frame from the terminal station STA-1. At this time, it is supposed that the response time measured by the response time measuring section 13 does not exceed the initial set response time ACK_TIME_OUT0 (Step S4 - NO). In this case, the control section 15 recognizes that the terminal station STA-1 has received the data frame. The control section 15 stores the response time measured by the response time measuring section 13, as the set response time ACK_TIME__OUT1, in the set response time storing area 17-1 (Step S6).

For example, the wireless LAN terminal AP (transmitting section 11) carries out the communication with the terminal station STA-1. This communication is the second communication or the subsequent.

The transmitting section 11 transmits the data frame to the terminal station STA-1 (Step S1). At this time, the response time measuring section 13 measures the response time from the time when the transmitting section 11 transmits the last portion of the data frame to the terminal station STA-j to the time when the receiving section 12 receives the head portion of the ACK frame from the terminal station STA-j. Also, the transmission interval measuring section 14 measures the transmission interval time from the time when the transmitting section 11 transmits the last portion of the previous data frame to the terminal station STA-j to the time when it transmits the head portion of the data frame as the current data frame. The control section 15 refers to the set transmission interval time storing area 18 and the set response time storing area 17-1 in the memory 16. That is, the control section 15 refers to the set transmission interval time TIMELAG and the initial set response time ACK_TIME_OUTO (Step S2 - NO, S7).

Also, it is supposed that the transmission interval time measured by the transmission interval measuring section 14 does not exceed the set transmission interval time TIMELAG (Step S8 - NO). Also, the receiving section 12 receives the ACK frame corresponding to the data frame from the terminal station STA-1. At this time, the response time measured by the response time measuring section 13 exceeds the initial response time ACK_TIME_OUT0. Or, although the receiving section 12 does not receive the ACK frame from the terminal station STA-1, the response time measured by the response time measuring section 13 exceeds the set response time ACK_TIME_ODT1 (Step S9 - YES). In this case, the control section 15 controls the transmitting section 11 so that the data frame is re-transmitted (Step S5).

On the other hand, it is assumed that the transmission interval time measured by the transmission interval measuring section 14 exceeds a set transmission interval time TIMELAG (Step S8 - YES). In this case, the control section 15 recognizes that the terminal station STA-j is moved to the next installation position from the original installation position by the user and that the set transmission interval time TIMELAG elapsed. The control section 15 further refers to the initial set response time storing area 17-0. That is, the control section 15 further refers to the initial set response time ACK_TIME_OUTO (Step S3).

The receiving section 12 receives the ACK frame corresponding to the data frame from the terminal station STA-1. At this time, the response time measured by the response time measuring section 13 exceeds the initial set response time ACK_TIME_OUTO, or the response time measured by the response time measuring section 13 exceeds the initial set response time ACK_TIME_OUT0 since the receiving section 12 does not receive the ACK frame from the terminal station STA-1 (Step S4 - YES). In this case, the control section 15 controls the transmitting section 11 so that the data frame is re-transmitted (Step S5).

The receiving section 12 receives the ACK frame corresponding to the data frame from the terminal station STA-1. At this time, it is supposed that the response time measured by the response time measuring section 13 does not exceed the initial set response time ACK_TIME_OUT0 (Step S4 - NO). In this case, the control section 15 recognizes that the terminal station STA-1 has received the data frame. The control section 15 stores the response time measured by the response time measuring section 13, as the set response time ACK_TIME_OUT1 in the set response time storing area 17-1 (Step S6).

When transmitting the first data frame to the terminal station STA-j, the wireless LAN terminal AP does not know the communication distance between the wireless LAN terminal AP and the terminal station STA-j. For this reason, in the present invention, when transmitting the first data frame to the terminal station STA-j, the wireless LAN terminal AP refers to the memory 16 and recognizes the initial set response time ACK_TIME_OUT0 corresponding to the maximal communication distance, in order to determine the success or failure of the reception of the ACK frame. The wireless LAN terminal AP re-transmits the data frame, if the response time measured by the response time measuring section 13 exceeds the initial set response time ACK_TIME_OUT0. Thus, the wireless LAN communication system of the present invention can carry out the optimal communication to determine the reception failure of the ACK frame.

When the wireless LAN terminal AP transmits the first data frame to the terminal station STA-j, the response time measured by the response time measuring section 13 does not exceed the initial set response time ACK_TIME_OUT0. This case implies that the wireless LAN terminal AP successfully receives the ACK frame and that the communication distance between the wireless LAN terminal AP and the terminal station STA-j is shorter than the maximal communication distance. However, when the wireless LAN terminal AP re-transmits the data frame by referring to the initial set response time ACK_TIME_OUTO even in the next communication with the terminal station STA-j, it takes the long time to re-transmit the data frame, and the reduction in the throughput is involved. For this reason, in order to refer to the set response time ACK_TIME_OUTj in the next communication with the terminal station STA-j, the wireless LAN terminal AP stores the response time measured by the response time measuring section 13 as the set response time ACK_TIME_OUTj in the memory 16. Thus, the wireless LAN communication system of the present invention can carry out the optimal communication that does not involve the reduction in the throughput.

When the wireless LAN terminal AP transmits the second or subsequent data frame to the terminal station STA-j, if whether or not the response time exceeds the initial set response time ACK_TIME_OUTO is determined although the communication distance between the wireless LAN terminal AP and the terminal station STA-j is shorter than the maximal communication distance, the reduction in the throughput would be involved. For this reason, in the present invention, when transmitting the second or subsequent data frame to the terminal station STA-j, the wireless LAN terminal AP refers to the memory 16 and recognizes the set response time ACK_TIME_OUTj and the set transmission interval time TIMELAG. The wireless LAN terminal AP re-transmits the data frame, if the transmission interval time measured by the transmission interval measuring section 14 does not exceed the set transmission interval time TIMELAG and the response time measured by the response time measuring section 13 exceeds the set response time ACK_TIME_OUTj. Thus, the wireless LAN communication system of the present invention can carry out the optimal communication in which the reduction in the throughput is not involved.

Also, in the present invention, when the wireless LAN terminal AP transmits the second or subsequent data frame to the terminal station STA-j, if the transmission interval time exceeds the set transmission interval time TIMELAG, the communication distance between the wireless LAN terminal AP and the terminal station STA-j is required to be known. Also, if whether or not the response time exceeds the set response time ACK__TIME__OUTj stored in the memory 16 is determined, there is a possibility of the determination of the reception failure of the ACK frame. For this reason, in the present invention, when transmitting the second or subsequent data frame to the terminal station STA-j, if the transmission interval time exceeds the set transmission interval time TIMELAG, the wireless LAN terminal AP further refers to the memory 16 and recognizes the initial set response time ACK_TIME_OUT0 corresponding to the maximal communication distance. The wireless LAN terminal AP re-transmits the data frame, if the response time measured by the response time measuring section 13 exceeds the initial set response time ACK_TIME_OUTO. Thus, the wireless LAN communication system of the present invention does not carry out the unnecessary determination of the reception failure of the ACK frame, when the terminal station STA-j is moved to the next installation position from the original installation position.

Also, in the present invention, when transmitting the second or subsequent data frame to the terminal station STA-j, the wireless LAN terminal AP recognizes the possibility that the terminal station STA-j is moved to the next installation position from the original installation position by the user if the transmission interval time exceeds the set transmission interval time TIMELAG. Moreover, the fact that the response time measured by the response time measuring section 13 does not exceed the initial set response time ACK_TIME_OUTO implies that the wireless LAN terminal AP successfully receives the ACK frame and that the communication distance between the wireless LAN terminal AP and the terminal station STA-j is shorter than the maximal communication distance. The wireless LAN terminal AP stores the response time measured by the response time measuring section 13 as the set response time ACK_TIME_OUTj in the memory 16, in order to refer to the set response time ACK_TIME_OUTj in the next communication with the terminal station STA-j. Thus, the wireless LAN communication system of the present invention can carry out the optimal communication corresponding to the communication distance without any unnecessary determination of the reception failure of the ACK frame.

The wireless LAN communication system of the present invention can carry out the optimal communication based on the communication distance, when the terminal station is moved to the next installation position from the original installation position. The wireless LAN communication system of the present invention can carry out the optimal communication to determine the reception failure of the ACK frame. The wireless LAN communication system of the present invention can carry out the optimal communication without any drop in the throughput.

The present invention is not limited to the above-mentioned exemplary embodiments. It is obvious to be able to carry out a modification and change without departing from the range and spirit of the present invention.

## Claims

1. A wireless LAN (Local Area Network) communication system comprising:
a wireless LAN terminal and a terminal station, which are connected to a wireless LAN (Local Area Network) network,
wherein said wireless LAN terminal comprises:
a transmitting section configured to transmit a data frame to said terminal station;
a receiving section configured to receive an ACK (Acknowledgement) frame for the data frame from said terminal station;
a response time measuring section configured to measure a response time from a time when said transmitting section transmits the data frame to said terminal station to a time when said receiving section receives the ACK frame from said terminal station;
a transmission interval measuring section configured to measure a transmission interval time from a time when said transmitting section transmits a previous data frame to said terminal station to a time when said transmitting section transmits the data frame as a current data frame;
a memory configured to store a predetermined set transmission interval time and a set response time for said terminal station; and
a control section configured to refer to said memory when the data frame is transmitted, to monitor the transmission interval time and the response time, and
wherein said control section controls said transmitting section to re-transmit the data frame when the transmission interval time does not exceed the set transmission interval time and the response time exceeds the set response time, and
said control section stores the response time in said memory as the set response time, when the transmission interval time exceeds the set transmission interval time.

2. The wireless LAN communication system according to claim 1, wherein said memory comprises:
an initial set response time storing section in which an initial set response time corresponding to a predetermined maximum communication distance is stored; and
a set response time storing section in which the set response time for said terminal station is stored, and
wherein when said transmitting section performs a first communication to said terminal station,
said control section:
refers to said initial set response time storing section,
controls said transmitting section to re-transmit the data frame if the response time exceeds the initial set response time, and
stores the response time in said set response time storing section as the set response time if the response time does not exceed the initial set response time.

3. The wireless LAN communication system according to claim 2, wherein said memory further comprises:
a set transmission interval time storing section in which the set transmission interval time is stored, and
wherein when said transmitting section performs a transmission to said terminal station,
said control section:
refers to said set transmission interval time storing section and said set response time storing section,
controls said transmitting section to re-transmit the data frame if the transmission interval time does not exceed the set transmission interval time and the response time exceeds the set response time, and
stores the response time in said set response time storing section as the set response time, if the transmission interval time exceeds the set transmission interval time.

4. The wireless LAN communication system according to claim 3, wherein said control section:
refers to said initial set response time storing section, if the transmission interval time exceeds the set transmission interval time,
controls said transmitting section to re-transmit the data frame, if the response time exceeds the initial set response time, and
stores the response time in said set response time storing section as the set response time, if the response time does not exceed the initial set response time.

5. A wireless LAN (Local Area Network) terminal connected with a terminal station through a wireless LAN network, said wireless LAN terminal comprising:
a transmitting section configured to transmit a data frame to said terminal station;
a receiving section configured to receive an ACK (Acknowledgement) frame for the data frame from said terminal station;
a response time measuring section configured to measure a response time from a time when said transmitting section transmits the data frame to said terminal station to a time when said receiving section receives the ACK frame from said terminal station;
a transmission interval measuring section configured to measure a transmission interval time from a time when said transmitting section transmits a previous data frame to said terminal station to a time when said transmitting section transmits the data frame as a current data frame;
a memory configured to store a predetermined set transmission interval time and a set response time for said terminal station; and
a control section configured to refer to said memory when the data frame is transmitted, to monitor the transmission interval time and the response time,
wherein said control section controls said transmitting section to re-transmit the data frame when the transmission interval time does not exceed the set transmission interval time and the response time exceeds the set response time, and
said control section stores the response time in said memory as the set response time, when the transmission interval time exceeds the set transmission interval time.

6. The wireless LAN terminal according to claim 5, wherein said memory comprises:
an initial set response time storing section in which an initial set response time corresponding to a predetermined maximum communication distance is stored; and
a set response time storing section in which the set response time for said terminal station is stored, and
wherein when transmitting section performs a first communication to said terminal station,
said control section:
refers to said initial set response time storing section,
controls said transmitting section to re-transmit the data frame if the response time exceeds the initial set response time, and
stores the response time in said set response time storing section as the set response time if the response time does not exceed the initial set response time.

7. The wireless LAN terminal according to claim 6, wherein said memory further comprises:
a set transmission interval time storing section in which the set transmission interval time is stored, and
wherein when said transmitting section performs a transmission to said terminal station,
said control section:
refers to said set transmission interval time storing section and said set response time storing section,
controls said transmitting section to re-transmit the data frame if the transmission interval time does not exceed the set transmission interval time and the response time exceeds the set response time, and
stores the response time in said set response time storing section as the set response time, if the transmission interval time exceeds the set transmission interval time.

8. The wireless LAN terminal according to claim 7, wherein said control section:
refers to said initial set response time storing section, if the transmission interval time exceeds the set transmission interval time,
controls said transmitting section to re-transmit the data frame, if the response time exceeds the initial set response time, and
stores the response time in said set response time storing section as the set response time, if the response time does not exceed the initial set response time.

9. A wireless LAN (Local Area Network) communication method which uses a computer connected with a counter computer through a wireless LAN, comprising:
transmitting a data frame to said terminal station;
receiving an ACK (Acknowledgement) frame for the data frame from said counter computer;
measuring a response time from a time when the data frame is transmitted to said counter computer to a time when the ACK frame is received from said counter computer;
measuring a transmission interval time from a time when a previous data frame is transmitted to said counter computer to a time when the data frame as a current data frame is transmitted; and
performing a control to refer to s memory in which a predetermined set transmission interval time and a set response time for said counter computer are stored, when the data frame is transmitted, and to monitor the transmission interval time and the response time, and
wherein said performing a control comprises:
controlling said transmitting such that the data frame is re-transmitted when the transmission interval time does not exceed the set transmission interval time and the response time exceeds the set response time; and
storing the response time in said memory as the set response time, when the transmission interval time exceeds the set transmission interval time.

10. The wireless LAN communication method according to claim 9, wherein said memory comprises:
an initial set response time storing section in which an initial set response time corresponding to a predetermined maximum communication distance is stored; and
a set response time storing section in which the set response time for said counter computer is stored, and
wherein when a first communication is performed to said counter computer in said transmitting,
said performing a control comprises:
referring to said initial set response time storing section;
controlling said transmitting such that the data frame is re-transmitted, if the response time exceeds the initial set response time; and
storing the response time in said set response time storing section as the set response time if the response time does not exceed the initial set response time.

11. The wireless LAN communication method according to claim 10, wherein said memory further comprises:
a set transmission interval time storing section in which the set transmission interval time is stored, and
wherein when a transmission to said counter computer is performed in said transmitting,
said performing a control comprises:
referring to said set transmission interval time storing section and said set response time storing section;
controlling said transmitting such that the data frame is re-transmitted, if the transmission interval time does not exceed the set transmission interval time and the response time exceeds the set response time; and
storing the response time in said set response time storing section as the set response time, if the transmission interval time exceeds the set transmission interval time.

12. The wireless LAN communication method according to claim 11, wherein said measuring a transmission interval time comprises:
referring to said initial set response time storing section, if the transmission interval time exceeds the set transmission interval time;
controlling said transmitting such that the data frame is re-transmitted, if the response time exceeds the initial set response time; and
storing the response time in said set response time storing section as the set response time, if the response time does not exceed the initial set response time.

13. A computer program for making said computer to execute each of the steps of said wireless LAN communication method.

14. A computer-readable software product in which said computer program according to claim 13 is stored therein.
